# EUROPÄISCHE PATENTSCHRIFT

(11) **EP 1 083 089 B1**
(45) Veröffentlichungstag und Bekanntmachung des Hinweises auf die Patenterteilung: **17.01.2007**
(21) Anmeldenummer: 00117064.6
(22) Anmeldetag: 09.08.2000
(51) Int. Cl.: B60Q 3/02

(54) **Orientierungsbeleuchtung in einem Kraftfahrzeug**
Orientation lighting in a vehicle
Eclairage orientable dans un véhicule

(30) Priorität: 11.09.1999 DE 19943533; 15.12.1999 DE 19960434
(43) Veröffentlichungstag der Anmeldung: 14.03.2001
(73) Patentinhaber: Dr.Ing. h.c.F. Porsche Aktiengesellschaft, 70435 Stuttgart (DE)
(72) Erfinder: Ziegerer, Michael, 75365 Calw (DE); Eberhardt, Stefan, 71522 Backnang (DE)

(56) Entgegenhaltungen:
- FR-A- 2 747 971
- US-A- 4 298 912
- US-A- 4 584 631
- US-A- 5 129 597

## Beschreibung

Die Erfindung betrifft eine Orientierungsbeleuchtung in einem Kraftfahrzeug. In modernen Fahrzeugen sind eine Reihe von Bedienungselementen und Ablagemöglichkeiten am Cockpit integriert, die im Dunkeln für den Fahrer, dann wenn sie nicht selbst eine aktive Beleuchtungseinheit tragen, nur schwer zu erkennen sind. Bekannt sind im Himmel integrierte Beleuchtungseinheiten, die vom Fahrer oder Beifahrer wahlweise ein- oder ausgeschaltet werden können, damit bei Bedarf eine entsprechende Beleuchtung des Cockpits erfolgt. Es werden für eine Orientierungsbeleuchtung beispielsweise kleine Lichtquellen in Form von Leuchtdioden oder von Lichtleiterauskopplungen verbaut. Das hier ausgestrahlte Licht wird durch Reflektion an der Umgebung der Lichtquelle häufig sichtbar, was zu eine Blendwirkung für die Fahrzeuginsassen führen kann. Eine solche Anordnung ist z.B. aus der US 4.298.912 bekannt, bei welcher eine Leseleuchte Schwenkbar in einem Montageschacht angeordnet. Bei der vorgeschlagenen erfindungsgemäßen Orientierungsbeleuchtung ist die Lichtquelle, welche für eine Ausleuchtung des Fahrer- und Beifahrerplatzes, sowie des Cockpits im Bereich des Himmels des Fahrzeuges integriert ist, nicht sichtbar, so daß die Insassen nicht irritiert oder geblendet werden können.

Die Anordnung der Orientierungsbeleuchtung in der vorhandenen Beleuchtungseinheit am Himmel des Fahrzeuges hat den Vorteil, daß bereits elektrischen Kontakte angeordnet sind und keine konstruktive Veränderung der elektrischen Leitungen oder gar zusätzliche elektrische Leitungen vorgesehen werden müssen. Die verschiedenen erfindungsgemäßen Merkmale stellen sicher, daß Lichtquellen, obwohl im Sichtbereich der Fahrzeuginsassen angeordnet, das Licht blendfrei ausstrahlen.

Das Vorsehen einer Abschirmung mit einer geschwungenen Kontur mit einer Ausnehmung und zwei Ausbuchtungen hat den Vorteil, daß durch die Ausnehmung in der Abschirmung das Cockpit gut beleuchtet wird, während durch die beiden Ausbuchtungen der Fahrer und Beifahrer keinen direkten Blickkontakt zur Lichtquelle haben.

Ein weiterer Vorteil ergibt sich durch das Verspiegeln einer Innenfläche einer zentralen Abschirmung, da Lichtstrahlen, welche auf die Verspiegelung auftreffen durch die Reflektion nicht sichtbar sind und auch keine indirekte Blendung der Fahrzeuginsassen über den Innenrückspiegel oder für einen Gegenverkehr auftreten kann.

Mit den Abschirmungen kann weiterhin die Ausleuchtungsform definiert werden und je nach Wunsch ein breiter Ausleuchtungskegel oder ein schmaler Ausleuchtungskegel realisiert werden.

Ausführungsbeispiele der Erfindung sind in den Figuren dargestellt und in der nachfolgenden Beschreibung näher erläutert. Es zeigt
- Fig. 1: die Baueinheit für die Innenraumbeleuchtung mit integrierter Orientierungsbeleuchtung,
- Fig. 2: die Orientierungsbeleuchtung in teilweise geschnittener Darstellung.

Die Figur 1 zeigt die Baueinheit für die Innenraumbeleuchtung mit den verschiedenen Leuchteinheiten wie ein- und ausschaltbare Leseleuchte, Ein- und Ausstiegsbeleuchtung und integrierter Orientierungsbeleuchtung 10, wobei die Orientierungsbeleuchtung 10 hier auf der der Windschutzscheibe 11 zugeordneten Seite der Beleuchtungseinheit zentral in der Mitte angeordnet ist.

Aufbau und Wirkungsweise der Orientierungsbeleuchtung 10 soll anhand der Figur 2 erläutert werden. Die Figur 2 zeigt die Orientierungsbeleuchtung 10 in teilweise geschnittener Darstellung, wobei durch das Bezugszeichen 11 symbolisch die Windschutzscheibe verdeutlicht werden soll und mit dem Bezugszeichen 12 der Fahrer oder auch die Fahrzeuginsassen symbolhaft angegeben werden. Die Lichtquelle des Orientierungslichtes 10 ist eine Leuchtdiode 20, die in einem Montageschacht 21 geringfügig zurückgesetzt angeordnet und gegenüber den Insassen durch eine erste halbschalenförmige Abschirmung 22 verdeckt ist. Durch das zurückgesetzte Anordnen der Leuchtdiode 20 im Montageschacht 21 werden die Flächen, die die Leuchtdiode 20 umgeben nicht angeleuchtet, wodurch sie auch für einen Betrachter nicht sichtbar sind. Das von der Leuchtdiode 20 ausgesendete Licht ist in der Figur 2 symbolisch durch die geschlängelte Linien 23 angegeben. Der Montageschacht 21 wird auf der der Windschutzscheibe 11 zugewandten Seite durch eine zweite Abschirmung 24 begrenzt, die über die Leuchtdiode 20 hinausragt.

Die zweite Abschirmung 24 ragt soweit über die Leuchtdiode 20 hinaus, daß die Leuchtdiode für die Insassen auch in einer indirekten Blickrichtung 27 über einen Innenrückspiegel 26 nicht sichtbar ist. In der Figur 2 ist die indirekte Blickrichtung, die durch den vorhandenen Innenrückspiegel 26 auftritt, durch eine gestrichelte Linie 27 dargestellt. Wie der Figur 2 zu entnehmen, ist die Leuchtdiode durch die zweite Abschirmung 24 auch aus dieser Richtung für den Fahrer nicht sichtbar.

Der Abschnitt der zweiten Abschirmung 24, der über die Leuchtdiode 20 hinausragt, kann wahlweise eine Aussparung 25 aufweisen, wie dies in Figur 2 gezeigt ist. Die Aussparung 25, wobei hier die Wanddicke der zweiten Abschirmung 24 in dem Bereich reduziert ist, ist so dimensioniert und angeordnet, daß das von der Leuchtdiode 20 ausgesandte Licht und damit die Lichtstrahlen 23 nicht auf die zweite Abschirmung 24 auftreffen. Auf diese Aussparung 25 kann dann verzichtet werden, wenn die erste Abschirmung 22 so dimensioniert ist, daß der kritische Bereich der zweiten Abschirmung 24 und die Leuchtdiode 20 für die Insassen weder in direkter Blickrichtung 28 noch in indirekter Blickrichtung 27 sichtbar sind.

Die erste halbschalenförmige Abschirmung 22 ist so gestaltet, daß die Lichtquelle 20 für die Insassen, deren direkte Blickrichtung durch die gestrichelte Linie 28 angegeben ist, nicht sichtbar ist. Für eine optimale Abschirmung der Leuchtdiode zur Vermeidung eines direkten Blickkontaktes des Fahrers auf die Lichtquelle und gleichzeitig ausreichende Ausleuchtung ist die schalenförmige erste Abschirmung 22 im Bereich der von den Fahrzeuginsassen wegweisenden oder auch abgewandten Kante 29 entsprechend ausgestaltet. Die Kante 29 hat eine sich verjüngende Gestaltung und wird im weiteren als Spitze 30 bezeichnet. Die Spitze 30 stellt sicher, daß unabhängig von der Größe des Fahrers oder Beifahrers die Leuchtdiode 20 nicht direkt sichtbar ist. Im Querschnitt ist die Kante 29 mit der Spitze 30 gut zu erkennen und es wird deutlich, daß das Licht der Leuchtdiode 20 nur auf die der Leuchtdiode 20 zugewandte Seite 31 der Spitze 30 scheint, welche wiederum so geneigt ist, daß sie auch nicht in der indirekten Blickrichtung 27 für die Fahrzeuginsassen sichtbar ist.

Die vom Fahrzeuginsassen nicht direkt sichtbare in Richtung der indirekten Blickrichtung 27 geneigte Innenfläche 32 wird verspiegelt, wobei hier ein Spiegelglas eingesetzt werden kann oder durch eine entsprechende Beschichtung z.B. mit spiegelnder Folie diese Innenfläche 30 verspiegelt ist. Durch die Verspiegelung der Innenfläche 32 wird Licht, welches von der Leuchtdiode 20 auf diese Innenfläche auftritt, hier nicht sichtbar, sondern bleibt für den Insassen des Fahrzeuges unsichtbar und kann zur zusätzlichen Ausleuchtung verwendet werden. Die verspiegelte Innenfläche 32 ist auch durch den indirekten Blickkontakt 27 für die Fahrzeuginsassen nicht sichtbar, da der Reflektionswinkel der Sichtstrahlen die verspiegelte Innenfläche 32 nur als dunkle Fläche erkennen läßt.

Letztendlich soll nochmals unter Zuhilfenahme der Figur 1 die den Fahrzeuginsassen abgewandte Kante 29 der ersten schalenförmigen Abschirmung 22 näher beschrieben werden. In der Figur 1 ist zu sehen, daß die vordere Kante 29 eine geschwungene Kontur aufweist, die im Mittelbereich eine Art Ausnehmung 13 aufweist. Diese Ausnehmung 13 sorgt für eine optimale Beleuchtung der Mittelkonsole, da das Licht der Leuchtdiode 22 hier nach unten hin besser austreten kann. Beidseitig dieser Ausnehmungen 13 ist die Kontur der vorderen Kante 29 nach vorne gezogen, so daß zwei Bögen 14 entstehen. Diese Anordnung von Ausnehmungen 13 und 14 sorgt für die Beleuchtung der Mittelkonsole bei gleichzeitiger Abschirmung des Fahrers und des Beifahrers.

## Patentansprüche

1. Orientierungsbeleuchtung für ein Fahrzeug, welche in Form einer Lichtquelle, insbesondere einer Leuchtdiode (20) im Himmel des Fahrzeuges integriert ist und welche durch Abschirmungen (22, 24) und entsprechende Anordnung dieser Abschirmungen von den Fahrzeuginsassen nicht direkt sichtbar ist, da die Lichtquelle in einem Montageschacht (21) geringfügig zurückversetzt eingesetzt ist und wobei eine erste halbschalenförmige Abschirmung (22) auf der den Fahrzeuginsassen zugewandten Seite der Orientierungsbeleuchtung (10) angeordnet ist, **dadurch gekennzeichnet, dass** die erste halbschalenförmige Abschirmung (22) an einer von den Fahrzeuginsassen wegweisenden Kante (29) sich zu einer Spitze (30) verjüngt und dass die Kante (29) eine geschwungene Kontur aufweist, die zumindest aus einer Ausnehmung (13) und zwei vorgezogene Bögen (14) besteht.

2. Orientierungsbeleuchtung nach Anspruch 1, **dadurch gekennzeichnet, dass** der Montageschacht auf der von den Fahrzeuginsassen (12) abgewandten Seite in Form einer zweiten Abschirmung (24) gegenüber der Leuchtdiode (20) so weit vorgezogen ist, dass die Leuchtdiode (20) sich nicht im Innenrückspiegel spiegelt und somit auch kein indirekter Blickkontakt (27) vom Fahrzeuginsassen auf die Leuchtdiode (20) gegeben ist.

3. Orientierungsbeleuchtung nach einem der Ansprüche 1 und 2, **dadurch gekennzeichnet, dass** die erste halbschalenförmige Abschirmung (22) auf ihrer der Leuchtdiode zugewandten Innenfläche (32) verspiegelt ist.

4. Orientierungsbeleuchtung nach Anspruch 3, **dadurch gekennzeichnet, dass** die verspiegelte Fläche durch Beschichten mit einer spiegelnden Folie hergestellt wird.

## Claims

1. Orientation lighting for a vehicle, which lighting is integrated into the roof lining of the vehicle in the form of a light source, especially a light-emitting diode (20), and is not directly visible by the vehicle occupants owing to shields (22, 24) and a suitable arrangement of these shields because the light source is inserted into a mounting shaft (21) so as to be slightly set back therein, and wherein a first shield (22) in the shape of a half-shell is arranged on the side of the orientation lighting (10) facing the vehicle occupants, **characterised in that** the first shield (22) in the shape of a half-shell tapers to a point (30) at an edge (29) pointing away from the vehicle occupants and **in that** the edge (29) has a curved contour comprising at least one recess (13) and two bends (14) which extend forwards.

2. Orientation lighting according to claim 1, **characterised in that** the mounting shaft on the side remote from the vehicle occupants (12) extends so far forwards in the form of a second shield (24) with respect to the light-emitting diode (20) that the light-emitting diode (20) is not reflected in the interior rearview mirror and, therefore, there is also no indirect observation (27) of the light-emitting diode (20) by the vehicle occupant.

3. Orientation lighting according to either one of claims 1 and 2, **characterised in that** the first shield (22) in the shape of a half-shell is made mirror-like on its inner surface (32) facing the light-emitting diode.

4. Orientation lighting according to claim 3, **characterised in that** the mirror-like surface is produced by coating with a reflective foil.

## Revendications

1. Éclairage orientable pour un véhicule qui est intégré dans le plafond du véhicule sous la forme d'une source lumineuse, en particulier d'une diode électroluminescente (20) et qui ne peut pas être vu directement par les occupants du véhicule en raisons des protections (22, 24) et de l'agencement correspondant de ces protections puisque la source lumineuse est introduite en étant légèrement ramenée vers l'arrière dans un compartiment de montage (21), et dans lequel une première protection en forme de demie coquille (22) est disposée sur le côté de l'éclairage orientable (10) tourné vers les occupants du véhicule, **caractérisé en ce que** la protection en forme de demie coquille (22) se rétrécit en pointe (30) sur l'un des bords (29) opposé aux occupants du véhicule et **en ce que** le bord (29) présente un contour sinueux qui se compose d'au moins un évidement (13) et de deux arcs qui dépassent.

2. Éclairage orientable selon la revendication 1, **caractérisé en ce que** le compartiment de montage dépasse du côté détourné des occupants du véhicule (12) sous la forme d'une deuxième protection (24) de sorte que la diode électroluminescente (20) ne se reflète pas dans le rétroviseur intérieur et qu'ainsi les occupants du véhicule n'ont aucun contact visuel indirect (27) sur la diode électroluminescente (20).

3. Éclairage orientable selon l'une des revendications 1 et 2, **caractérisé en ce que** la première protection en forme de demie coquille (22) est formée d'un miroir sur sa face intérieure (32) tournée vers la diode électroluminescente.

4. Éclairage orientable selon la revendication 3, **caractérisé en ce que** la surface formée d'un miroir est fabriquée par recouvrement avec une feuille réfléchissante.
